Europäisches Patentamt

European Patent Office

Office européen des brevets

(11) Publication number: **0 418 103 A2**

# EUROPEAN PATENT APPLICATION

(21) Application number: 90310100.4

(51) Int. Cl.⁵: **H04Q 7/04**, H04B 7/14

(22) Date of filing: 14.09.90

(30) Priority: 14.09.89 GB 8920829
11.12.89 GB 8927972

(43) Date of publication of application:
20.03.91 Bulletin 91/12

(84) Designated Contracting States:
AT BE CH DE DK ES FR GB GR IT LI LU NL SE

(71) Applicant: PCN ONE LIMITED
19, Berkeley Street
London W1X 5AE(GB)

(72) Inventor: Smith, Dennis
6 Carisbrooke Court
Romsey, Hants(GB)
Inventor: Tuttlebee, Walter Harold William, Dr.
51 St. Blaize Road
Romsey, Hants SO51 7JY(GB)
Inventor: Waters, Patrick Hugh
3 Sandalwood Close
Calmore, Totton, Hants.(GB)

Inventor: West, Barry
54 Torquay Road
Chelmsford, Essex(GB)
Inventor: Westcott, Andrew Mark Graham
21 Crocus Way
Springfield, Chelmsford, Essex(GB)
Inventor: Rotheram, Stephen, Dr.
6 Playle Chase
Great Totham, Maldon, Essex(GB)
Inventor: Davis, John
201 Hanarry Drive
Lawrenceville, Georgia 30245(US)
Inventor: Hightower, Neale
4 Old Tucker Road
Stone Mountain, Georgia 30087(US)

(74) Representative: Tolfree, Roger Keith et al
GEC-Marconi Research Centre West
Hanningfield Road
Great Baddow Chelmsford Essex CM2
8HN(GB)

(54) Mobile radio communication system.

(57) A mobile radio comprises a base station BS arranged to communicate with a mobile subscriber unit SU by means of a relay station R2. The provision of the relay R2 enabling the subscriber unit to transmit on a lower power than would be required to make direct contact with the base station BS.

# MOBILE RADIO COMMUNICATION SYSTEM

This invention arose when considering methods providing inexpensive personal mobile radio telephone communication. The fundamental problem with such systems is that a portable subscriber unit needs to operate at low power and therefore has a short range. This calls for small cell size if a cellular-type network is used and a correspondingly large number of base stations.

According to the invention there is provided a mobile radio communication system comprising a base station serving a geographical area; moveable subscriber units in the area and radio relay stations via which the subscriber units and the base station communicate; each relay station having automatic gain control and being designed to suppress unuseable input signals, which may include interfering signals, in the direction through the relay station from subscriber unit to base station, wherein the system is designed to send a message between the base station and a mobile subscriber unit substantially simultaneously via more than one relay station.

By employing the invention, the need for small cells and the consequential high cost of numerous base stations can be avoided by the simple expedient of distributing large numbers of relatively small inexpensive relay stations within one "cell" served by a base station.

A gain control is needed because adequate range is only achieved by making full use of weak as well as strong received signal. Suppression of unuseable input signals is necessary to prevent a relayed wanted signal being swamped by unwanted signals relayed by other relay stations. An input signal will normally be categorised as unuseable if it is below a certain strength.

It would be possible to provide for a subscriber unit to communicate in some circumstances directly with the base station but in a preferred arrangement, such communication is prohibited. In this arrangement, the relay stations are designed to transmit at a different frequency to reception so that one relay station does not receive signals transmitted by another.

One preferred feature of the invention is the capability of two or more relay stations to receive simultaneously a signal transmitted by a given subscriber unit and to relay that signal also simultaneously to the base station. This gives a diversity which can eliminate interruption to transmission caused by obstructions between a subscriber station and a relay station or between a relay station and the base station.

Each relay station demodulates a received signal and remodulates it using a different signal format. For example, a different bit rate, coding scheme or air interface protocol could be used.

Signals between the relay station and the base station on one hand and the relay station and the subscriber units on the other hand can be transmitted and received via a common or, more preferably, different respective antennas. The relay station may be capable of relaying a sufficient frequency bandwidth to convey a single radio carrier. Alternatively it may be arranged to convey a multiplicity of frequency bands each capable of conveying a single radio carrier. Alternatively again, it may be capable of relaying a relatively wide bandwidth capable of containing a multiplicity of radio carriers within it.

The relay stations will normally be fixed, but it would be possible for them to be located in vehicles including trains, buses, private cars, aeroplanes, etc. Alternatively, they could be incorporated in transportable units for deployment at desired locations.

Naturally, the relay station will normally be required to relay signals in both directions. It would however, be possible for such communication to take place in just one of the two possible directions, the communication in the other direction being provided by a link directly between the base station and the subscriber unit.

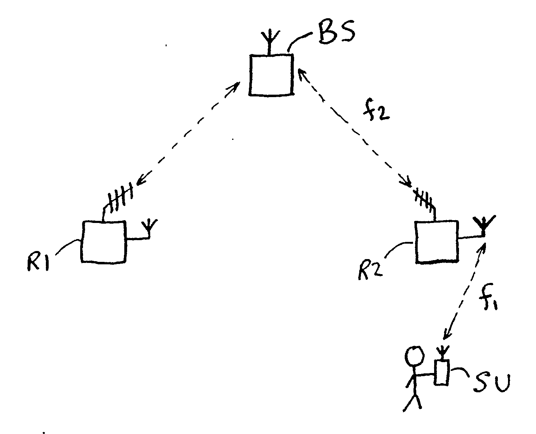

One way in which the invention may be performed will now be described by way of example, with reference to the accompanying drawing which shows, very schematically, a radio telephone communication system constructed in accordance with the invention.

Referring to the drawing, a base station BS communicates with subscribers unit, one of which is shown as SU, via a number of relay stations of which two are shown as R1 and R2 respectively. Each relay station has a directional antenna for communication with the base station and an omnidirectional antenna for communication with nearby subscriber units. In the illustration, the subscriber unit is shown as communicating, using frequency F1, with relay unit R2. When the user moves to a different area, such communication will take place via the relay unit R1 using the same frequency. When the subscriber unit is somewhere between both relay stations, both will be employed simultaneously to relay the same message. Communication between the relay stations R1 and R2 and base station uses a different frequency, F2.

## Claims

1. A mobile radio communication system, comprising a base station serving a geographical area; moveable subscriber units in the area and radio relay stations via which the subscriber units and the base station can communicate; each relay station having automatic gain control and being designed to suppress input signals below a predetermined power level in the direction through the relay station from subscriber unit to base station, wherein the system is designed to send a message between the base station and a mobile subscriber unit substantially simultaneously via more than one relay station.

2. A mobile radio communication system comprising a base station serving a geographical area; mobile subscriber units in the area; and radio relay stations; the subscriber units and the base station being designed to communicate only via the relay stations, and to send a message between the base station and a mobile subscriber unit substantially simultaneously via more than one relay station.

3. A system according to claim 1 or 2 in which each relay station comprises means for measuring the level of a signal received from a subscriber unit, coding such information and transmitting it to the base station and in which the base station comprises means for instructing the subscriber unit to adjusts its power level.

4. A system according to claim 1, or any claim dependant thereon in which the automatic gain control is arranged to provide information in the relayed signal indicative of the level of the input signal and in which the base station comprises means for instructing the subscriber unit to adjust the power level.

5. A system according to any preceding claim in which each relay station is designed to demodulate signals received from subscriber units and to provide at least one modulated signal for transmission to the base station.

6. A system according to any preceding claim in which each relay station transmits signals to the base station at a frequency different from signals received from subscriber units.

7. A system according to any preceding claim in which each relay station has two antennas, one for communication with subscriber units and the other being for communication with the base station.